# NEUE EUROPÄISCHE PATENTSCHRIFT

(11) **EP 0 803 552 B2**
(45) Veröffentlichungstag und Bekanntmachung des Hinweises auf die Entscheidung über den Einspruch: **15.01.2003**
(45) Hinweis auf die Patenterteilung: 10.05.2000
(21) Anmeldenummer: 97104851.7
(22) Anmeldetag: 21.03.1997
(51) Int. Cl.: C09D 5/36, C09D 17/00

(54) **Verfahren zur Herstellung einer Perlglanzpigment-Zubereitung**
Process for preparing a composition of pearlescent pigments
Procédé de préparation de la composition contenant des pigments nacrés

(30) Priorität: 24.04.1996 DE 19616287
(43) Veröffentlichungstag der Anmeldung: 29.10.1997
(73) Patentinhaber: ECKART-WERKE STANDARD BRONZEPULVER-WERKE CARL ECKART GMBH & CO., D-90763 Fürth (DE)
(72) Erfinder: Kaupp, Günter, Dr., 91284 Neuhaus (DE); Sommer, Günter, Dr., 91207 Lauf (DE)
(74) Vertreter: LOUIS, PÖHLAU, LOHRENTZ & SEGETH

(56) Entgegenhaltungen:
- EP-A- 0 523 567
- EP-A- 0 633 299
- WO-A-85/00614
- WO-A-93/11199
- DE-A- 2 603 211
- DE-A- 3 627 329
- US-A- 3 708 318

## Beschreibung

Die Erfindung betrifft ein Verfahren zur Herstellung einer Perlglanzpigment-Zubereitung (Präparation) als Vorprodukt für eine Perlglanzpigment enthaltende Druckfarbe.

Perlglanzpigment ist gewöhnlich staub- oder pulverförmig im Handel. Für die Verarbeitung in der Druckfarbe wird das Perlglanzpigment mit einer Bindemittel-Lösung und gegebenenfalls drucküblichen Additiven vermischt und die Mischung auf die für die Applikation im Druckverfahren erforderliche Viskosität eingestellt. Zur Erzielung des für Perlglanzpigment typischen weichen Glanzeffekts auch in der Druckfarbe ist eine möglichst gleichmäßige Verteilung und Orientierung der Perlglanzpigment-Teilchen in dem Bindemittel erforderlich.
Prinzipiell sind bei jeder Verarbeitung von Perlglanzpigmenten hohe Scherkräfte zu vermeiden. Daher muß das Perlglanzpigment vor dem eigentlichen Dispergiervorgang zur Herstellung der Druckfarbe über mehrere Stunden mit Lösemittel vorbehandelt werden (sog. "Sumpfen"). Dieser Vorgang ist zeit- und damit auch kostenaufwendig. Trotz der Vorbehandlung durch "Sumpfen" und Rühren kann die gewünschte gleichmäßige Dispersion nicht immer erreicht werden und dadurch auch der Druck nicht voll befriedigen.

Die EP 523 567 A1 schlägt die Verwendung von Perlglanzpigment für eine wasserverdünnbare Druckfarbe vor, zu deren Formulierung das Pigment langsam mit dem Bindemittel verrührt wird. Als Applikationsverfahren für diese Druckfarben ist die Verarbeitung aus dem Lackwerk einer Offsetmaschine oder aus einem Flexodruckwerk bevorzugt. Das Perlglanzpigment wird u. a. in Form eines mit Titandioxid beschichteten Glimmerschuppenpigments eingesetzt, das unter der Marke Iriodin® erhältlich ist.

In der EP 633 299A2 ist die Verwendung von Perlglanzpigmenten für eine niedrigviskose Offset-Druckfarbe beschrieben. Die Herstellung der Offsetdruckfarben-Zubereitung erfolgt durch Dispergierung des Perlglanzpigments in der Farbe mit Hilfe einer Kugelmühle, Sandmühle oder eines Walzenstuhles (Dreiwalzen), gegebenenfalls bei unterschiedlichen Dispergiertemperaturen. Dabei werden die Pigmentteilchen vom Bindemittel umhüllt. Die aus den Geräten auslaufenden Mahlpasten werden anschließend mit den Additiven zum fertigen Produkt versetzt. Auch diese Art der Dispergierung muß aufgrund der Empfindlichkeit der Pigmentteilchen gegen mechanische Scherkräfte auβerordentlich sorgfältig und langsam ablaufen.

Aus DE 36 27 329 A1 ist schon eine Perlglanzpigment enthaltende Pigmentpräparation zum Einfärben von insbesondere thermoplastischen Kunststoffen bekannt, bei der das Perlglanzpigment mit einem Polyester/Polyurethan-Blockcopolymer mit tertiären Aminogruppen beschichtet ist, um dadurch eine gute Dispergierbarkeit zu erzielen. Hierzu wird das Perlglanzpigment unter langsamer Bewegung mit dem genannten Blockcopolymer benetzt, um die Pigmentblättchen nicht zu zerstören, gegebenenfalls ein Lösungsmittel entfernt und anschließend eine pulverförmige frei fließende Perlglanzpigment-Präparation erhalten, die gegebenenfalls nur noch gesiebt werden muß. Die Perlglanzpigment-Präparation kann danach unmittelbar ohne weitere Vorbehandlung in thermoplastische Polymere eingearbeitet werden und weist zu diesen eine gute Verträglichkeit auf. Diese Präparation ist jedoch für Druckfarben nicht geeignet, weil das Polyester/Polyurethan-Blockcopolymer nicht filmbildend ist.

Aufgabe der Erfindung ist es daher, Perlglanzpigment für Druckfarben in einer Form bereitzustellen, daß dadurch die eigentliche Herstellung der Druckfarbe erheblich erleichtert und vereinfacht wird und vor allem die erwartete Druckqualität, d.h. ein hervorragender Perlglanzeffekt erreicht wird.

Diese Aufgabe wird dadurch gelöst, daß das Perlglanzpigment durch das im Anspruch 1 angegebene Verfahren zu einem teilchenförmigen Vorprodukt der Druckfarbe vorbereitet wird.

Es hat sich überraschend herausgestellt, daß durch eine Vorbenetzung der Perlglanzpigment-Teilchen mit demjenigen Bindemittel, das für die zu verarbeitende Druckfarbe erforderlich oder erwünscht ist, eine erheblich raschere und gleichmäßigere Dispergierung der Pigmentteilchen in der bei der eigentlichen Herstellung der Druckfarbe herangezogenen Bindemittel-Lösung stattfindet. Neben einer Zeitersparnis und damit verbundenen Flexibilisierung für den Anwender führt dies zu einer deutlichen Verbesserung des angestrebten Perlglanzes im Druck. Überraschend ist dies deshalb, weil angesichts des Vorliegens der Perlglanzpigment-Präparation in grober Teilchenform ein intensiverer Mischvorgang zu erwarten ist, um eine hinreichend gleichmäßige Dispersion zu erzielen. Entscheidend dafür scheint die Vorbenetzung der Pigmentteilchen mit dem entsprechenden Bindemittel zu sein, die überraschenderweise trotz Überführung der Paste in eine kompakte Teilchenform erhalten bleibt. Offensichtlich führt die dabei auftretende Pressung oder Verdichtung der Paste sogar zu einer besonders innigen Vorbenetzung der Pigmentteilchen mit dem Bindemittel.

Als Bindemittel zur Vorbenetzung des Perlglanzpigments kommen alle üblicherweise für Druckfarben in Frage kommenden Bindemittel bzw. Bindemittelgemische in Betracht, soweit diese gleich oder zumindest verträglich mit dem jeweils zum Einsatz kommenden Bindemittelsystem der Druckfarbe sind. Somit können Bindemittel auf der Basis von Cellulose, Polyacrylat-Polymethacrylat-, Alkyd-, Polyester-, Polyphenol-, Harnstoff-, Melamin-, Polyterpen-, Polyvinyl-, Polyvinylchlorid-, Polyvinylpyrrolidon-Harzen, Polystyrolen, Polyolefinen, Cumaron-lnden-, Kohlenwasserstoff-, Keton-, Aldehyd-, Aromaten-Formaldehyd-Harzen, Carbamidsäure-, Sulfonamid-, Epoxid-Harzen, Polyurethanen und/oder natürlichen Ölen oder Derivaten der genannten Substanzen eingesetzt werden. Eine besonders gute Redispergierbarkeit der erfindungsgemäßen Perlglanzpigment-Präparation hat sich gezeigt, wenn als Bindemittel Cellulose bzw. Celluloseverbindungen eingesetzt werden. Cellulose bzw. Celluloseverbindungen führen ersichtlich zu einer intensiven Vorbenetzung der Perlglanzpigment-Teilchen und ergeben damit ein Druckfarben-Vorprodukt, das sich wiederum in einer damit verträglichen Bindemittel-Lösung bei der Herstellung der Druckfarbe rasch dispergieren läßt. Dies gilt insbesondere für die Vorbenetzung mit Celluloseverbindungen da diese offenbar einerseits die Bindung der an die Teilchen des Perlglanzpigments, andererseits die Bildung der Paste unterstützen, aus der durch Kompaktieren die Präparation in Teilchenform erzeugt wird.

Zu der Gruppe der Cellulose bzw. Celluloseverbindungen, die sich als besonders für das erfindungsgemäße Verfahren eignen, zählen Cellulosenitrat, Alkylcellulose, Hydroxicellulose, Hydroxialkylcellulose und Celluloseacetobutyrat.

Die eingesetzte Menge an Bindemittel ist nicht kritisch und liegt im Bereich von 0,5 bis 45 Gew.-%, bevorzugt 2 bis 15 Gew.-%.

Von Bedeutung ist jedoch die durch Zugabe von Lösemittel für das Bindemittel eingestellte Viskosität der Mischung vor der Formung der Präparation-Teilchen durch Kompaktieren zur Teilchenform, da bei zu hohem Lösemittelgehalt der Mischung die Perlglanzpigmente stark zur Separation von der Bindemittel-Lösung neigen, während bei einer zu hohen Viskosität die Benetzung unvollständig und die Formung von Teilchen beträchtlich erschwert ist.

Die Überführung der Perlglanzpigment-Paste in eine kompakte Teilchenform kann nach unterschiedlichen, dem Fachmann geläufigen Verfahren erfolgen, nämlich durch Tablettieren, Brikettieren, Pelletieren, Granulieren oder Sprühgranulieren. In allen diesen Fällen wird auf die Paste in einem mehr oder weniger viskosen Zustand eine Pressung ausgeübt, die die eingangs geschilderte Vorbenetzung der Pigmentteilchen mit dem Bindemittel unterstützt. Entsprechend haben die Teilchen die Form von Tabletten, Briketts, Pellets, Granulat, Kugeln, Würstchen oder eine sonstige entsprechende grobkörnige Form. Besonders bevorzugt als Kompaktierungsvorgang ist ein Verpressen oder Extrudieren.

Bei einem Pressen der Mischung oder Paste aus Perlglanzpigment und Bindemittel-Lösung durch eine Lochplatte, das entweder chargenweise mittels Kolben oder kontinuierlich durch einen Extruder erfolgt, entstehen Teilchen in Würstchenform. Durch die entsprechende Einstellung der Viskosität der Mischung kann dafür gesorgt werden, daß die Länge der Teilchen sich durch Abbrechen oder Abreißen beim Austreten aus der Lochplatte selbsttätig reguliert. Das Abtrennen der aus der Lochplatte austretenden Pastenstränge zu Teilchen kann jedoch auch in bekannter Weise durch mechanische Einwirkung, z. B. durch umlaufende Trennmesser, erfolgen. Das Pelletieren oder Granulieren erfolgt in bekannter Weise auf Pelletiertellern oder in Granulierbehältern und führt in der Regel zu kugelförmigen Präparation-Teilchen. Die zunächst im Wege des Pressens durch eine Lochplatte hergestellten Teilchen können zusätzlich anschließend im Wege des Pelletierens oder Granulierens nachgeformt werden. Ein Tablettieren oder Brikettieren erfolgt durch Pressen der Paste in entsprechenden Formen.

Durch die anschließend an das Formen der Präparation-Teilchen erfolgende Trocknung wird das im Bindemittel enthaltene Lösemittel weitgehend entfernt, so daß die Präparation-Teilchen einerseits eine hinreichende mechanische Widerstandsfähigkeit zeigen, um bei der Handhabung und beim Transport ihre Form zu behalten, andererseits bei dem Kontakt mit einer Bindemittel-Lösung schon bei geringster mechanischer Einwirkung (Umrühren) rasch zerfallen und dadurch dispergieren.

Wenn das Bindemittel nach der Entfernung des Lösemittels noch hinreichend viskos ist, um das Kompaktieren der Paste zur Teilchenform zu gestatten, kann daran gedacht sein, schon vor dem Kompaktieren durch Trocknen das Lösemittel aus der Paste zu entfernen. Gegebenenfalls kann durch eine Temperaturerhöhung der Paste die Viskosität für den Kompaktierungsvorgang verringert werden.

Die Art der Trocknung der durch das Kompaktieren hergestellten Teilchen bzw. der Paste und das dadurch erfolgende Austreiben des Lösungsmittels ist im wesentlichen abhängig von der Art des verwendeten Lösungsmittels. Da die meisten der hier in Frage kommenden Lösungsmittel, insbesondere in Verbindung mit der Cellulose als Bindemittel, unter dem Erweichungspunkt des Bindemittels flüchtig sind, läßt sich die Trocknung bei erhöhter Temperatur durchführen. Dabei kann im Fall der Trocknung der Teilchen daran gedacht werden, die Temperatur nahe am Erweichungspunkt des Bindemittels zu wählen, um dadurch eine zumindest in einer Randschicht der Teilchen einsetzende Sinterung der mit dem Bindemittel vorbenetzten bzw. beschichteten Perlglanzpigment-Teilchen zu bewirken. Hierdurch wird die Formbeständigkeit der Präparation-Teilchen für die Handhabung und die Dauer des Transports verbessert.

Die vorliegende Erfindung befaßt sich auch mit Perlglanzpigment auf Basis von Glimmer, wie z. B. Muskovit, Biotit oder synthetischem Glimmer, mit einer TiO₂und/oder Fe₂O₃-Beschichtung. Gegebenenfalls können darüber hinaus noch weitere Metalloxidschichten der Reihe B, Al, Si, Cr, Sn, Zn, Zr oder Ce enthalten sein. Ebenso ist es möglich Perlglanzpigment mit einer Beschichtung von Titansuboxiden, Titanoxinitriden und Titannitriden oder Mischungen davon zu verwenden.
Zusätzlich zur Metalloxidbeschichtung kann auch eine Belegung mit farbgebenden Pigmenten oder Farbstoffen auf dem Perlglanzpigment vorhanden sein. Außerdem ist eine derartige koloristische Ausgestaltung durch Abmischen der Perlglanzpigmente mit farbgebenden Substanzen bei der Anpastung realisierbar.

Im Rahmen des erfindungsgemäßen Verfahrens lassen sich auch Abmischungen von Perlglanzpigmenten und Metallpigmenten in der gewünschten Präparation herstellen, da sich gezeigt hat, daß ein gewisser Anteil an Metallpigmenten den Einfluß der Vorbenetzung mit dem Bindemittel nicht beeinträchtigt. Jedoch soll der Anteil an Metallpigmenten nicht mehr als 20 Gewichts-% des Perlglanzpigment-Anteils betragen. Als Metallpigment eignen sich alle im Effektpigmentsektor gängigen Metalle wie Aluminium, Kupfer, Zink, Zinn und ihre Legierungen. Aluminium- und Goldbronzepigmente sind hierfür bevorzugt.

## Patentansprüche

1. Verfahren zur Herstellung einer Perlglanzpigment-Zubereitung (Präparation), bei dem Perlglanzpigment mit einem Bindemittel und gegebenenfalls mit einem Lösungsmittel und/oder Additiven angepastet wird, wobei alle Komponenten mit dem Applikationssystem der Präparation verträglich sind und das gegebenenfalls zugegebene Lösingsmittel, wieder entfernt wird, **dadurch gekennzeichnet, daß** die Paste in eine kompakte Teilchenform mit einer Teilchengröße von 0,2 bis 80 mm gebracht und in dieser Form anschließend von dem Lösungsmittel befreit wird oder zunächst von dem Lösungsmittel befreit und anschließend in die kompakte Teiichenform gebracht wird und daß die Perlgalnzpigment-Zubereitung als Vorprodukt für eine Perlglanzpigment enthaltende Druckfarbe dient.

2. Verfahren nach Anspruch 1, **dadurch gekennzeichnet, daß** als Bindemittel eine Celluloseverbindung aus der Gruppe Cellulose-Nitrat, Alkylcellulose, Hydroxicellulose, Hydroxialkylcellulose und Celluloseacetobutyrat verwendet wird.

3. Verfahren nach Anspruch 1 oder 2, **dadurch gekennzeichnet, daß** die Paste in eine grobkörnige Form gebracht wird.

4. Verfahren nach Anspruch 3, **dadurch gekennzeichnet, daß** die Formgebung der Paste durch Tablettieren, Brikettieren, Pelletieren, Granulieren, Sprühgranulieren oder Extrudieren erfolgt.

5. Verfahren nach Anspruch 3, **dadurch gekennzeichnet, daß** die Formgebung der Paste durch Abtropfen oder durch Formgießen erfolgt.

6. Verfahren nach einem der Ansprüche 1 bis 5, **dadurch gekennzeichnet, daß** das Bindemittel in einer Menge von 0,5 bis 45 Gew.-%, vorzugsweise von 2 bis 15 Gew.-%, bezogen auf das Perlglanzpigment, eingesetzt wird.

7. Verfahren nach einem der Ansprüche 1 bis 6, **dadurch gekennzeichnet, daß** die Paste vor oder nach dem Kompaktieren durch Trocknen unter vermindertem Druck und/oder bei erhöhter Temperatur von dem Lösungsmittel befreit wird.

8. Verfahren nach Anspruch 7, **dadurch gekennzeichnet, daß** die Teilchen während des Trocknungvorganges zumindest teilweise gesintert werden.

9. Verfahren nach einem der Ansprüche 1 bis 8, **dadurch gekennzeichnet, daß** das eingesetzte Perlglanzpigment ein Standard-Pigment auf Basis von Glimmer, bevorzugt Muskovitglimmer, mit einer TiO₂- und/oder Fe₂O₃-Beschichtung und gegebenenfalls noch weiteren Metalloxidschichten der Reihe B, Al, Cr, Si, Sn, Zn, Zr oder Ce ist.

10. Verfahren nach einem der Ansprüche 1 bis 8, **dadurch gekennzeichnet, daß** das eingesetzte Perlglanzpigment ein Standard-Pigment auf Basis von Glimmer, bevorzugt Muskovitglimmer, mit einer Beschichtung von Titan-Suboxiden und/oder Titanoxinitriden und/oder Titannitriden ist.

11. Verfahren nach einem der Ansprüche 1 bis 8, **dadurch gekennzeichnet, daß** das eingesetzte Perlglanzpigment ein Standard-Pigment auf Basis von Glimmer, bevorzugt Muskovitglimmer, mit einer Metalloxidbeschichtung ist und eine weitere Belegung mit farbgebenden Pigmenten oder Farbstoffen besitzt.

12. Verfahren nach einem der Ansprüche 1 bis 11, **dadurch gekennzeichnet, daß** die Perlglanzpigment-Zubereitung eine Mischung von 80 bis 99,5 Gew.% Perlglanzpigment und 0,5 bis 20 Gew.% Metalleffekt-Pigmenten auf Basis von Al, Cu und Legierungen davon ist.

13. Verfahren nach einem der Ansprüche 1 bis 12, **dadurch gekennzeichnet, daß** die Perlglanzpigment-Zubereitung auch Farbpigmente oder Farbstoffe im Bereich von 0,1 bis 30 Gew.-%, bezogen auf das Periglanzpigment, enthalten kann.

14. Verfahren nach einem der Ansprüche 1 bis 13,
**dadurch gekennzeichnet,**
**daß** das Bindemittel gleich dem Bindemittel der Druckfarbe ist.

## Claims

1. A process for the production of a pearlescent pigment composition (preparation), in which pearlescent pigment is made into a paste with a binding agent and optionally with a solvent and/or additives, wherein all components are compatible with the preparation application system and the solvent which is optionally added is removed again, **characterised in that** the paste is put into a compact particle form of a particle size of 0.2 to 80 mm and then **in that** form freed of the solvent or that the paste is firstly freed of the solvent and then put into the compact particle form, and that the pearlescent pigment composition serves as a pre-product for a printing ink containing pearlescent pigment.

2. A process as set forth in claim 1 **characterised in that** the binding agent used is a cellulose compound from the group consisting of cellulose nitrate, alkyl cellulose, hydroxy cellulose, hydroxyalkyl cellulose and cellulose acetobutyrate.

3. A process as set forth in claim 1 or claim 2 **characterised in that** the paste is put into a coarse-grain form.

4. A process as set forth in claim 3 **characterised in that** the operation of shaping the paste is effected by tabletting, briquetting, pelleting, granulating, spray-granulating or extruding.

5. A process as set forth in claim 3 **characterised in that** the operation of shaping the paste is effected by dropping off or by moulding.

6. A process as set forth in one of claims 1 to 5 **characterised in that** the binding agent is used in an amount of 0.5 to 45% by weight, preferably 2 to 15% by weight, with respect to the pearlescent pigment.

7. A process as set forth in one of claims 1 to 6 **characterised in that** the paste is freed of the solvent prior to or after the compacting operation by drying at reduced pressure and/or at elevated temperature.

8. A process as set forth in claim 7 **characterised in that** the particles are at least partially sintered during the drying operation.

9. A process as set forth in one of claims 1 to 8 **characterised in that** the pearlescent pigment used is a standard pigment based on mica, preferably muscovite mica, with a TiO2- and/or Fe2O3-coating and possibly also further metal oxide layers of the series B, Al, Cr, Si, Sn, Zn, Zr or Ce.

10. A process as set forth in one of claims 1 to 8 **characterised in that** the pearlescent pigment used is a standard pigment based on mica, preferably muscovite mica, with a coating of titanium suboxides and/or titanium oxynitrides and/or titanium nitrides.

11. A process as set forth in one of claims 1 to 8 **characterised in that** the pearlescent pigment used is a standard pigment based on mica, preferably muscovite mica, with a metal oxide coating, and has a further covering with colouring pigments or dyes.

12. A process as set forth in one of claims 1 to 11 **characterised in that** the pearlescent pigment composition is a mixture of 80 to 99.5% by weight of pearlescent pigment and 0.5 to 20% by weight of metal effect pigments based on Al, Cu and alloys.

13. A process as set forth in one of claims 1 to 12 **characterised in that** the pearlescent pigment composition can also contain colour pigments or dyes in the range of 0.1 to 30% by weight with respect to the pearlescent pigment.

14. A process as set forth in one of claims 1 to 13 **characterised in that** the binding agent is the same as the binding agent of the printing ink.

## Revendications

1. Procédé pour la fabrication d'une préparation d'une composition à base de pigments nacrés, du type dans laquelle le pigment nacré est mis en pâte avec un agent de liaison et éventuellement avec un agent dissolvant et/ou des additifs, tous les composants étant compatibles avec le système d'application de la composition, et l'agent dissolvant introduit éventuellement étant ensuite éliminé, **caractérisé en ce que** la pâte est amenée à une forme particulaire compacte dont les particules ont une taille de 0,2 à 80 mm, et est amenée à cette forme particulaire compacte juste après élimination de l'agent dissolvant ou juste avant élimination de l'agent dissolvant, et **en ce que** la préparation à base de pigments nacrés sert de produit de départ pour un colorant d'impression contenant des pigments nacrés.

2. Procédé selon la revendication 1, **caractérisé en ce que** l'on utilise comme agent de liaison un composé cellulosique choisi dans le groupe constitué par le nitrate de cellulose, les alkylcellulose, l'hydroxycellulose, les hydroxyalkylcellulose, et l'acétobutyrate de cellulose.

3. Procédé selon la revendication 1 ou 2, **caractérisé en ce que** la pâte est amenée à une forme à grains grossiers.

4. Procédé selon la revendication 3, **caractérisé en ce que** la forme donnée à la pâte résulte d'une mise en tablettes, d'une mise en briquettes, d'une mise en pellets, d'une granulation, d'une atomisation ou d'une extrusion.

5. Procédé selon la revendication 3, **caractérisé en ce que** la forme donnée à la pâte résulte d'un égouttage ou d'un moulage par coulée.

6. Procédé selon l'une des revendications 1 à 5, **caractérisé en ce que** l'agent de liaison est introduit à raison de 0,5 à 45% en poids, de préférence de 2 à 15% en poids par rapport au pigment nacré.

7. Procédé selon l'une des revendications 1 à 6, **caractérisé en ce que** la pâte est débarrassée de l'agent dissolvant avant ou après le compactage, par séchage sous pression réduite et/ou à température élevée.

8. Procédé selon la revendication 7, **caractérisé en ce que** les particules sont au moins partiellement frittées au cours du processus de séchage.

9. Procédé selon l'une des revendications 1 à 8, **caractérisé en ce que** le pigment nacré introduit est un pigment standard à base de mica, de préférence de muscovite, comportant une couche de TiO₂ et/ou de Fe₂O₃ et éventuellement des couches additionnelles d'oxydes métalliques de la série de B, Al, Cr, Si, Sn, Zn, Zr ou Ce.

10. Procédé selon l'une des revendications 1 à 8, **caractérisé en ce que** le pigment nacré introduit est un pigment standard à base de mica, de préférence de muscovite, comportant une couche de sous-oxyde de titane et/ou d'oxynitrures de titane et/ou de nitrures de titane.

11. Procédé selon l'une des revendications 1 à 8, **caractérisé en ce que** le pigment nacré introduit est un pigment standard à base de mica, de préférence de muscovite, comportant une couche d'oxyde métallique et un revêtement additionnel de pigments colorants ou de matières colorantes.

12. Procédé selon l'une des revendications 1 à 11, **caractérisé en ce que** la préparation à base de pigments nacrés consiste en un mélange de 80 à 99,5% en poids de pigment nacré et de 0,5 à 20% en poids de pigments à effet métallique à base d'AI, Cu et leurs alliages.

13. Procédé selon l'une des revendications 1 à 12, **caractérisé en ce que** la préparation à base de pigments nacrés peut également contenir des pigments colorés ou des matières colorantes à raison de 0,1 à 30% en poids par rapport au pigment nacré.

14. Procédé selon l'une des revendications 1 à 13, **caractérisé en ce que** l'agent de liaison constitue en même temps le liant de la matière colorante.
